# FASCICULE DE BREVET EUROPEEN

(11) **EP 2 983 884 B1**
(45) Date de publication et mention de la délivrance du brevet: **07.06.2017**
(21) Numéro de dépôt: 14716303.4
(22) Date de dépôt: 08.04.2014
(51) Int. Cl.: B29B 17/02, C08J 11/14, B08B 3/08, B01J 8/16, B01D 11/02

(54) **DISPOSITIF DE TRAITEMENT PAR SOLVOLYSE D'UN MATERIAU SOLIDE COMPOSITE EN VUE D'EXTRAIRE DES FIBRES DU MATERIAU TRAITE**
VORRICHTUNG ZUR BEHANDLUNG EINES FESTEN VERBUNDSTOFFES DURCH SOLVOLYSE ZUR GEWINNUNG VON FASERN AUS DEM BEHANDELTEN STOFF
DEVICE FOR TREATING A SOLID COMPOSITE MATERIAL BY SOLVOLYSIS WITH A VIEW TO EXTRACTING FIBRES FROM THE TREATED MATERIAL

(30) Priorité: 10.04.2013 FR 1353246
(43) Date de publication de la demande: 17.02.2016
(73) Titulaire: Sacmo, 44220 Coueron (FR)
(72) Inventeur: BAUDU, Christophe, 44210 Pornic (FR)
(74) Mandataire: Vidon Brevets & Stratégie
(86) Numéro de dépôt international: PCT/EP2014/057086
(87) Numéro de publication internationale: WO 2014/166962

(56) Documents cités:
- EP-A1- 2 119 741
- DE-C- 732 294
- AGENCE AUGURAL: "UNE EURO-REGION PERFORMANTE ET INNOVANTE", INTERNET CITATION, 16 juin 2011 (2011-06-16), pages 1-11, XP002684817, Extrait de l'Internet: URL:http://europe-en-paysdelaloire.eu/admi n/FCKnew/uploaded/file/Plurifonds/CRS/CRS% 2016_6_2011/DP%20Consolide_vdef.pdf [extrait le 2012-10-08]
- The Eurecomp Consortium: "Recycling Thermoset Composites of the SST", EURECOMP , 15 septembre 2012 (2012-09-15), pages 1-15, XP002717031, Extrait de l'Internet: URL:http://www.transport-research.info/Upl oad/Documents/201301/20130116_145654_17343 _EURECOMP_FinalSummaryReport_Sep2012.pdf [extrait le 2013-11-26]
- GOTO ET AL: "Chemical recycling of plastics using sub- and supercritical fluids", JOURNAL OF SUPERCRITICAL FLUIDS, PRA PRESS, US, vol. 47, no. 3, 1 janvier 2009 (2009-01-01), pages 500-507, XP025914992, ISSN: 0896-8446, DOI: 10.1016/J.SUPFLU.2008.10.011 [extrait le 2008-10-21]

## Description

### 1. Domaine de l'invention

Le domaine de l'invention est celui des techniques et des équipements pour le traitement de matériaux solides, en particulier fibreux, et plus précisément d'un dispositif pour le recyclage de déchets composites. L'invention s'applique en particulier au traitement des matériaux composites, en vue de séparer les fibres et les résines polymérisées contenues dans les matériaux composites, ceci en vue d'obtenir des composés organiques et des fibres réutilisables. L'invention s'applique également au traitement d'autres matériaux solides de diverses origines, tels que les pneus, les algues vertes, les circuits imprimés, etc...

### 2. Art antérieur

Depuis plusieurs années, les matériaux composites sont de plus en plus utilisés pour remplacer leurs équivalents en acier, titane ou aluminium, entre autres, ceci du fait de l'ensemble de leurs propriétés notamment en termes de tenue mécanique, de poids, de résistance à la corrosion... Cette tendance s'est particulièrement développée dans les domaines de la construction navale, aéronautique et automobile.

Il en résulte que la quantité de déchets de matériaux composites, soit issue de la fabrication, soit issue des produits en fin de vie, ne cesse d'augmenter.

Or, la législation européenne a récemment évolué, qui peut conduire à interdire la mise en décharge ou l'incinération de ces matériaux. La législation impose désormais aux industries des composites de recycler leurs déchets de production ainsi que les déchets issus des produits en fin de vie.

L'état de la technique propose actuellement essentiellement trois méthodes de traitement des matériaux composites thermodurcissables, à savoir :
- le broyage mécanique ;
- la décomposition thermique ;
- la voie thermochimique.

Selon l'approche mécanique, les matériaux sont broyés de façon à réduire la taille des échantillons, ceci en vue de réutiliser le broyat comme renfort dans d'autres résines ou béton. Toutefois, les matériaux obtenus ont des propriétés mécaniques nettement moins intéressantes que celles présentées par les matériaux du même type réalisés à base de composants neufs.

Dans les procédés thermiques, on distingue plusieurs méthodes utilisées pour séparer les fibres de la résine, se différenciant entre elles par la température et la concentration en oxygène du milieu réactionnel.

On connaît notamment un processus thermique par oxydation continue utilisant un réacteur à lit fluidisé, élaboré pour recycler les composites comprenant des fibres de carbone et une résine époxy. La matrice de résine époxy est partiellement oxydée à 550 °C. Les fibres de carbone récupérées sont propres et gardent environ 80% de leur résistance originale, ceci avec un module élastique non modifié.

Cette technique à lit fluidisé fonctionne à une température relativement élevée, ce qui implique une dépense énergétique importante et ce qui tend, par ailleurs, à dégrader quelque peu les propriétés des matériaux à traiter tels que les fibres, les circuits imprimés, les composants hétérogènes, etc.

Une autre technique réside dans la mise en oeuvre d'une torche à plasma, cette technologie étant essentiellement utilisée pour le traitement de l'amiante. Dans ce cadre, il s'agit d'une solution technique tout à fait satisfaisante, mais le processus reste cher, ce qui limite son exploitation à l'échelle industrielle.

On connaît encore une autre technique de décomposition thermique par gazéification, qui consiste en une conversion conduisant à décomposer thermiquement le solide en des matériaux combustibles (CO, H₂, N₂, goudron et cendres), en présence ou non d'un élément de gaz réactif, qui peut être de l'air, du CO₂ de la vapeur d'eau... Le procédé de gazéification dans l'air est une technique courante et économique, émettant un gaz relativement « pauvre » en azote et ayant un pouvoir calorifique de l'ordre de 6 MJ/m3. Toutefois, cette technique présente l'inconvénient de ne fournir qu'une revalorisation énergétique, et pas de revalorisation matière ; de produire des goudrons de forte masse moléculaire, des suies, qu'il faut détruire après la production des gaz. Une autre voie réside donc dans les procédés thermochimiques, et en particulier dans la technique désignée par le terme de solvolyse. La solvolyse est un processus thermochimique mettant en oeuvre un solvant liquide destiné à briser les liaisons de la matrice thermodurcissable, dans l'objectif de libérer les fibres des autres composants du matériau. La solvolyse peut être effectuée à basse température et à basse pression, ou à haute température et à haute pression. De plus, elle peut être exécutée en dessous du point critique (on parle alors de solvolyse subcritique), soit au dessus du point critique (on parle alors de solvolyse supercritique).

La technique de solvolyse s'accompagne de plusieurs possibilités avantageuses, notamment :
- la diminution significative des temps de réaction, ceci par l'augmentation de la température et/ou de la pression ;
- le recours à des solvants peu toxiques, voire non toxiques, et peu chers, en remplacement des solvants organiques et/ou des catalyseurs classiquement mis en avant.

Par rapport aux autres procédés cités précédemment, la solvolyse présente l'avantage, lorsqu'elle est exécutée à haute température, de rester dans des plages de température inférieures à 450°C (comparativement au réacteur à lit fluidisé fonctionnant autour de 550°C, et à la torche à plasma qui fonctionne autour de 900°C et plus). Le Comité Régional de suivi des fonds européens du 16 Juin 2011, présente dans son rapport l'activité de la demanderesse, et montre notamment la réalisation d'un réacteur de 0,5 litre et le projet de réalisation d'un réacteur de 25 litres. Ces prototypes sont destinés principalement à traiter par solvolyse des pièces en fibre de carbone dans le domaine de l'aéronautique. Après une heure de traitement environ, le réacteur est vidangé et on constate que la plupart des pièces introduites sont traitées. Cependant certaines fibres ne sont pas correctement séparées de la résine et doivent repasser un cycle de traitement dans le réacteur.

Le document DE 732 294 publié le 26 Février 1943 décrit une enceinte permettant d'extraire de l'huile, de la graisse ou de la cire, de substances solides par un solvant liquide à haute température. L'enceinte oscille autour de son axe longitudinal. Les substances sont retenues par une grille au fond de l'enceinte et l'huile est récupérée par des tuyaux, puis les substances solides sont dissoutes par un solvant et emportées dans un flux de lessivage.

Le document EP 2119 741 publié le 18 Novembre 2009, décrit un processus de recyclage de matières contenant des fibres comprenant la dissolution des matières dans un solvant. La dissolution forme un azéotrope avec l'eau permettant d'extraire facilement les particules solides qui sont ainsi récupérées. Dans ce contexte, la séparation s'effectue dans un récipient, sans avoir besoin d'une quelconque agitation pour faciliter la dissolution.

### 3. Objectifs de l'invention

L'invention a donc notamment pour objectif de combler cette insuffisance de l'art antérieur.

### 4. Exposé de l'invention

Cet objectif, ainsi que d'autres qui apparaîtront par la suite, sont atteints grâce à l'invention qui a pour objet un dispositif de traitement d'un matériau solide composite comprenant des fractions solides revalorisables à extraire, en particulier des fibres, comprenant :
- des moyens de réception du matériau solide composite, ce moyen de réception étant constitué d'un panier ajouré équipé d'un couvercle sur le dessus,
- un réacteur délimitant une enceinte étanche recevant de façon amovible lesdits moyens de réception,
- des moyens d'injection d'au moins un solvant dans le réacteur,
- des moyens de montée en température du réacteur aptes à engendrer une température et une pression dans ladite enceinte de nature à provoquer une réaction de solvolyse ou de dissolution du matériau pendant une durée de traitement,
- un moyen d'oscillation du réacteur afin d'exercer un déplacement du solvant au sein de celui-ci pendant la durée du traitement solvothermal du matériau solide composite.

Ainsi, l'invention propose un dispositif de traitement de matériaux fibreux par solvolyse, conçu de façon apte à traiter des quantités importantes et régulières de matériaux, satisfaisant ainsi les attentes des domaines industriels qui se voient imposer le recyclage des déchets engendrés par leur activité. L'invention permet de recycler des matériaux composites en les disposant dans un panier ajouré équipé d'un couvercle sur le dessus, en séparant d'une part les résines polymérisées contenues dans ces matériaux, et les fibres d'autre part, ceci avec des temps de cycles performants tout en limitant la température de réaction pour préserver les propriétés des fibres recyclées. La récupération des fibres est facilitée par le fait qu'elles restent dans le panier ajouré, le solvant s'écoulant à travers les perforations du panier.

De manière plus générale, l'invention s'applique au traitement de matériaux composites comprenant une matrice dans laquelle sont liées entre elles des fractions solides. L'extraction de ces fractions solides s'opère par destruction partielle et/ou dissolution de la matrice, suite à quoi sont récupérés les composants résistants au traitement (les fibres ou autres particules solides) d'une part et, d'autre part, les fractions liquéfiées ou gazéifiées.

Selon un mode particulier de réalisation, la coque du panier ajouré est une double enveloppe percée de trous. De cette manière, le risque de pyrolyse des produits à traiter est limité.

Selon un mode particulier de réalisation, le réacteur est placé dans une maille, le moyen de déplacement intervenant directement sur la maille pour la faire osciller. De cette manière, la maille permet de rigidifier les pièces en mouvements et de maintenir le réacteur fermé lors du traitement.

Selon un mode particulier de réalisation, le moyen de déplacement comporte un arbre pivotant solidaire de la maille coopérant avec un palier solidaire d'un support, ledit arbre étant à la verticale du centre de gravité de l'ensemble constitué de la maille, du réacteur et de son contenu. De cette manière, la maille et le réacteur oscillent autour d'un axe qui supporte la quasi totalité du poids, le moyen d'oscillation n'a pas besoin d'une forte puissance pour générer le mouvement.

Selon un mode particulier de réalisation, le moyen de déplacement comporte une bielle couplée à une extrémité par une liaison pivot avec la maille et à l'autre extrémité par une seconde liaison pivot fixée en périphérie d'un disque animé en rotation. De cette manière, l'oscillation est produite par un moyen simple et solide.

Selon un mode particulier de réalisation, le réacteur comporte un corps fermé par un bouchon, et la maille dispose de moyen de basculement dudit corps pour amener ce corps dans une position apte à recevoir ledit moyen de réception. De cette manière, seul le corps du réacteur n'a besoin de basculer pour faire entrer ou sortir les produits à traiter.

Selon un mode particulier de réalisation, la maille dispose d'un bouchon animé en translation et en rotation, et destiné à fermer ledit réacteur lors du traitement. De cette manière, la maille maintient solidement le réacteur en position fermé lors du traitement.

Selon un mode particulier de réalisation, les moyens de réception sont animés en translation par des rails de guidage placés à l'intérieur du corps du réacteur. De cette manière, les produits à traiter peuvent être amener automatiquement devant l'entrée du corps du réacteur et glisser à l'intérieur de celui-ci sans intervention manuelle.

Selon un mode particulier de réalisation, les moyens d'injection de solvant comporte une rampe d'arrosage intégré dans le corps du réacteur apte à asperger le matériau au début du traitement. De cette manière, le solvant peut être uniformément projeté sur l'ensemble des produits à traiter.

Selon un mode particulier de réalisation, le moyen d'oscillation comporte quatre ergots solidaires de la maille pénétrant dans un trou placé en zone périphérique de quatre disques animés en rotation, lesdits disques étant supportés par couple par deux supports. De cette manière, les mouvements à appliquer au réacteur qui déclenchent le mouvement du solvant sont plus variés.

### 5. Liste des figures

D'autres caractéristiques et avantages de l'invention apparaîtront plus clairement à la lecture de la description suivante d'un mode de réalisation préférentiel de l'invention, donné à titre d'exemple illustratif et non limitatif, et des dessins annexés parmi lesquels :
la figure 1 présente un premier exemple en coupe verticale d'un dispositif de traitement d'un matériau fibreux selon l'art antérieur,
la figure 2 est une vue générale d'un dispositif de traitement permettant une oscillation du réacteur selon un exemple préféré de réalisation,
la figure 3 est une vue générale de profil d'un dispositif de traitement selon la figure 2 avec le réacteur en position de chargement,
la figure 4 est une vue générale de profil d'un dispositif de traitement selon la figure 2 au cours du traitement, la maille étant inclinée,
la figure 5 présente une vue générale d'une variante de réalisation d'un dispositif de traitement dans une position de traitement,
la figure 6 présente un exemple particulier de réalisation d'un dispositif de traitement dans une position de chargement,
la figure 7 présente une vue de face et de profil de l'exemple de dispositif de traitement de la figure 6 dans laquelle la maille est en position horizontale,
la figure 8 présente une vue de profil de l'exemple de dispositif de traitement de la figure 6 dans une première position de traitement,
la figure 9 présente une vue de profil de l'exemple de dispositif de traitement de la figure 6 dans une seconde position de traitement,
la figure 10 présente une vue du dessus d'un exemple de réalisation d'une maille pour le dispositif de traitement illustré par la figure 6.

### 6. Description d'un mode de réalisation de l'invention

### 6.1 Principe général

La présente invention concerne un dispositif de traitement de matériau solide composite, composé par exemple de fibres de carbone solidifié par de la résine. L'invention permet notamment de séparer la résine des fibres afin ensuite de les réutiliser. Les pièces à traiter sont mises dans un panier qui est placé dans un réacteur du dispositif. Le réacteur est ensuite fermé et un solvant est injecté. Des moyens de montée en température du réacteur et en pression s'appliquent dans ladite enceinte de nature à provoquer une réaction de solvolyse ou de dissolution du matériau pendant une durée déterminée. Un moyen d'oscillation déplace le réacteur afin d'exercer un déplacement du solvant au sein du réacteur pendant la durée déterminée. De cette manière, les éléments placés dans le réacteur sont brassés dans le solvant de façon à présenter un contenu homogène tout au long du traitement.

### 6.2 Description d'un mode de réalisation

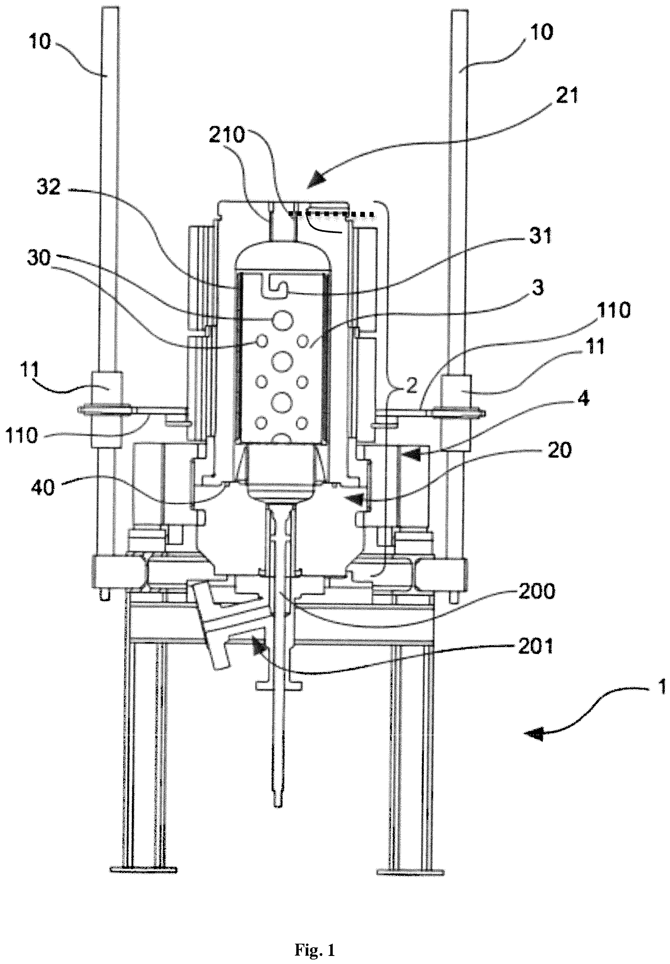

Tel que cela apparaît sur la **FIG.1****,** un dispositif de traitement d'un matériau fibreux en vue d'extraire les fibres du matériau, comprend selon l'art antérieur :
- un bâti 1, du type incluant un châssis monté sur pied ;
- un réacteur 2 monté sur le bâti 1 ;
- des moyens de réception 3 destinés à être logés dans le réacteur 2, les moyens de réception étant prévus pour accueillir le matériau à traiter, par exemple un panier ajouré.

Le réacteur 2 comprend :
- une partie basse constituée par un corps 20,
- une partie haute constituée par une cloche 21.

Le corps 20 et la cloche 21 sont susceptibles d'être amenés dans deux configurations distinctes :
- une configuration dans laquelle ils sont écartés l'un de l'autre, le réacteur étant par conséquent dans une position d'ouverture dans laquelle il permet d'introduire des moyens de réception au sein du réacteur ou d'extraire des moyens de réception à partir du réacteur;
- une configuration dans laquelle le corps et la cloche sont réunis de façon à délimiter une enceinte étanche (tel qu'illustré par la **FIG.1**), à l'intérieur de laquelle les moyens de réception sont destinés à être logés.

Le réacteur du premier prototype possède une capacité de 0.5 litre, il a permis de montrer la faisabilité de la solvolyse. Le second prototype, tel que décrit par la **FIG.1****,** d'une contenance de 25 litres autorise une utilisation industrielle appliquée au recyclage. Cependant, le second prototype nécessite de découper les pièces en petits morceaux avant de les introduire dans le panier du réacteur. Il est prévu de construire un troisième prototype comprenant un réacteur de 400 litres permettant de recycler des pièces de dimensions importantes sans avoir besoin de les découper au préalable en multiples morceaux. Le dispositif de traitement 1 comprend également :
- des moyens d'injection 210 d'un solvant dans le réacteur, une tuyauterie par exemple qui traverse la cloche 21,
- des moyens de montée en température du réacteur 32, aptes à engendrer une température et une pression dans l'enceinte du réacteur de nature à provoquer une réaction du solvolyse du matériau. Ce moyen est par exemple constitué d'une résistance électrique entourant le corps 20 du réacteur. En variante, le moyen de montée en température peut être une rampe au gaz, ou un générateur de micro-ondes,
- des moyens de purge 200 du réacteur, de préférence situé en partie basse. Ce moyen est par exemple un conduit traversant le corps 20 et débouchant par vanne de purge 201 apte à ouvrir et fermer le conduit, autorisant ou non la vidange du réacteur. Un tuyau permet l'écoulement du liquide de la cuve vers un bac de récupération.

Les moyens de réception 3 du matériau à traiter sont constitués par un panier de forme adaptée à la géométrie interne du réacteur, par exemple cylindrique ou de section oblongue. La paroi du moyen de réception présente une pluralité de perforations 30 au travers desquelles le solvant injecté dans l'enceinte peut s'écouler. Le panier 3 comporte un couvercle 31 également ajouré. Un opérateur remplit le panier 3 de matériau à traiter, par exemple des pièces en fibres de carbone, et place le panier dans le réacteur 2. La cloche est alors coulissée verticalement vers le bas, le long des mâts 10, jusqu'à venir au contact du corps 20 du réacteur. En variante, un manipulateur automatique assure la mise en place du panier dans le réacteur et le retrait du panier à partir du réacteur. On note qu'un tel manipulateur automatique peut être associé à un carrousel, ou tout autre procédé technique approprié, sur lequel sont disposés des paniers dont certains sont remplis du matériau à traiter et d'autres sont remplis du matériau tel qu'il apparaît une fois traité en sortie du réacteur.

Tel qu'illustré par la **FIG.1****,** le bâti 1 porte un ensemble de mâts 10 sur lesquels sont montés coulissants des fourreaux 11 solidaires de la cloche 21, par l'intermédiaire au moins d'une pièce de liaison 110.

Ces mâts 10 constituent donc des moyens de guidage en coulissement vertical de la cloche 21 par rapport au corps 20 en vue d'amener la cloche soit dans une position (haute) d'ouverture, soit dans une position (basse) de fermeture du réacteur.

Par ailleurs, le dispositif comprend des moyens de serrage 4 de la cloche 21 sur le corps 20, en position de fermeture. Un joint d'étanchéité est prévu de façon à assurer l'étanchéité entre la cloche 21 et le corps 20 en position de fermeture du réacteur. Dans l'exemple du second prototype illustré par la **FIG.1****,** ce joint 40, en l'occurrence présentant une section rectangulaire (ou pouvant être de tout autre section) est selon le présente mode de réalisation monté sur le corpus 20 du réacteur.

Il est à noter que le métal du réacteur peut être protégé contre la corrosion induite par la réaction de solvolyse, soit intrinsèquement, soit par un dépôt, soit par application d'un potentiel électrique, cette méthode étant conduite sans empêcher de provoquer simultanément ou ultérieurement une éventuelle électrolyse en vue de fournir des réactifs impliqués dans la réaction, ceci au moyen, si besoin, d'une deuxième électrode.

L'expérience montre que la chaleur produite par l'élément chauffant 32 ne se répartit pas de façon uniforme et que le traitement des produits est plus performant au milieu du réacteur qu'au niveau des extrémités. Cette différence de résultats obtenus est due à un manque d'homogénéité du mélange formé par l'eau et les produits. Cette constatation a entrainé la réalisation d'un troisième prototype qui ne présente pas l'inconvénient décrit ci-dessus. La présente invention prévoit un déplacement de l'ensemble du réacteur en cours du traitement pour agiter le solvant dans l'enceinte du réacteur et ainsi appliquer un traitement plus uniforme aux produits. Ce troisième prototype, d'une capacité portée à 400 litres possède un réacteur utilisé à l'horizontal, et une position en oblique de chargement et de déchargement du panier.

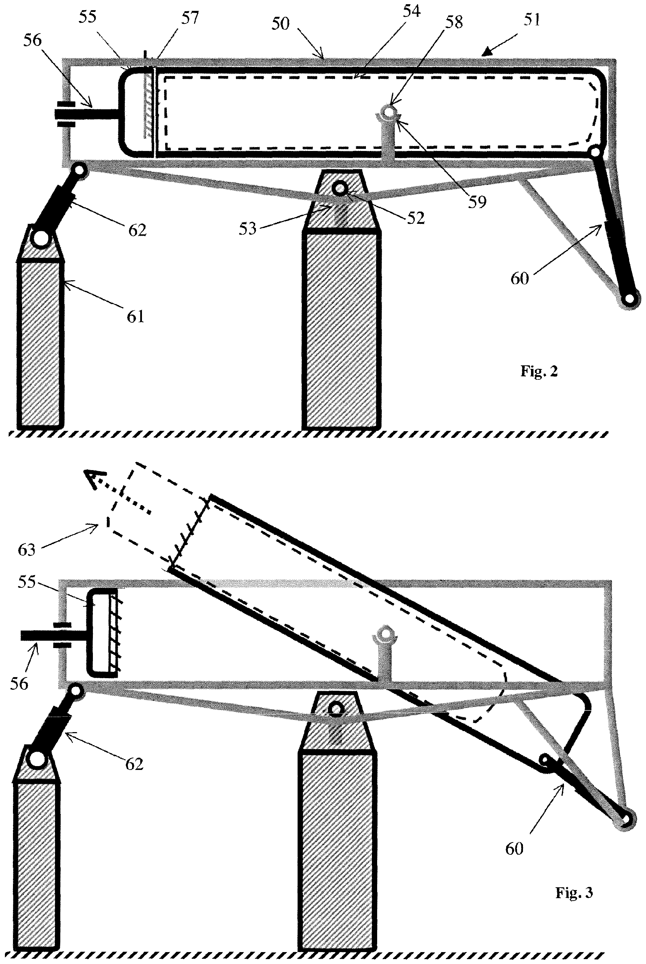

La **FIG.2** présente un schéma simplifié d'un dispositif de traitement par solvolyse selon un exemple de réalisation de l'invention. Le dispositif dispose d'un réacteur 50 monté à l'intérieur d'une maille 51, cette maille peut osciller par pivotement sur un arbre 52 couplé à un palier 53 disposé en partie supérieure d'un pilier vertical scellé au sol. L'arbre pivotant 52 se trouve approximativement à la verticale du centre de gravité de l'ensemble formé de la maille, du réacteur et de son contenu. Le pilier est apte à supporter l'intégralité du poids de l'ensemble du dispositif de traitement.

Le réacteur 50 comporte un corps 54 et un bouchon 55 formant une enceinte étanche et conçu pour résister à de fortes pressions. Le bouchon 55 est animé en translation par un axe 56 permettant sa désolidarisation avec le corps 54. Des moyens de fermeture 56 assurent le serrage du bouchon sur le corps afin d'assurer l'étanchéité de l'enceinte et la résistance à la pression. Selon un exemple préféré de réalisation, les moyens de fermeture sont constitués de dents 57 disposées tout autour du corps 54 du réacteur et de son bouchon 55. Les surfaces des dents se situent dans des plans hélicoïdaux par rapport à l'axe du réacteur. La fermeture consiste à amener le bouchon en contact avec l'ouverture du corps dans un mouvement de translation, puis à serrer les dents du bouchon contre les dents du corps dans un mouvement de rotation.

La maille 51 est constituée d'un cadre ouvert sur le dessus et le dessous, le corps du réacteur étant monté sur un axe pivotant à l'intérieur de la maille. Deux ergots cylindriques 58 dépassent de part et d'autre du corps du réacteur et sont posés sur des paliers 59 solidaires de la maille. De cette manière, le corps du réacteur une fois désolidarisé de son bouchon, peut pivoter à l'intérieur de la maille sur ses ergots 58 constituant ainsi un axe de pivotement. Ce mouvement qui permet un basculement pour dégager vers le haut l'ouverture du corps 54 du réacteur est déclenché par un moyen de basculement intégré à la maille 51. Selon un exemple de réalisation, ce moyen de basculement comporte un vérin 60 dont le corps est couplé à la maille par un axe de rotation et dont le piston est couplé à l'extrémité opposée du corps du réacteur par un autre axe de rotation. Un autre exemple de réalisation d'un moyen de basculement consiste à motoriser la rotation des ergots 58 à l'aide de roues dentées.

On a dit précédemment que la maille dans son ensemble peut pivoter sur son axe 52. Ce mouvement qui permet un balancement autour d'une position horizontale est déclenché par un moyen de déplacement fixé à la partie supérieure d'un second pilier 61 scellé au sol. Selon un exemple de réalisation, ce moyen de déplacement de la maille comporte un vérin 62 dont le corps est couplé au pilier 61 par un premier axe de rotation et dont le piston est couplé à une extrémité opposée de la maille par un autre axe de rotation. Un autre exemple de réalisation d'un tel moyen de déplacement de la maille sera détaillé par la suite.

Des tuyauteries, des pompes et un réservoir (non représentées sur la **FIG. 2**) permettent le remplissage de solvant dans le réacteur. Un élément de filtrage, des vannes pilotées, des conduites flexibles de vidange et un bac de récupération des effluents complètent le système hydraulique.

La **FIG.3** est une vue générale du même dispositif de traitement avec le réacteur en position de chargement. Le bouchon 55 a auparavant été désolidarisé du corps 54 du réacteur et ce dernier est libre de basculer sous le contrôle du vérin 60 selon un angle de 30° par rapport à l'horizontal. Les produits sont préalablement placés dans un panier ajouré 63 équipé d'un couvercle sur le dessus. La translation du panier à l'intérieur du corps 54 du réacteur peut s'effectuer manuellement ou de façon automatique à l'aide de rails de guidage disposés à l'intérieur du corps du réacteur. Il est ainsi possible de prévoir un dispositif de traitement associé à des chariots positionnant des paniers 63 remplis de produits à traiter et les introduisant successivement dans le corps du réacteur. De même, une fois le traitement terminé, les paniers 63 sont extraits du corps du réacteur à l'aide des chariots et les produits traités peuvent être récupérés.

Selon un perfectionnement, le panier 63 constituant les moyens de réception présente un jeu de deux parois, éventuellement mobiles l'une par rapport à l'autre, l'une étant par exemple une paroi épaisse apte à retarder l'échauffement, ou encore une double paroi contenant de l'eau ou un solvant approprié. Les deux parois sont ajourées par des orifices circulaires aptes à favoriser le déplacement du solvant lors du traitement par solvolyse. Les orifices des parois ne sont de préférences pas en vis à vis. La présence d'une double paroi protège les produits à traiter et évite le phénomène de pyrolyse pendant les phases de chargement et d'injection du solvant.

L'opération de solvolyse se déroule de la façon suivante.

Dans un premier temps, le bouchon 55 est désolidarisé du corps 54 du réacteur et ce dernier est basculé en position de chargement comme le montre la **FIG.3****.** Puis, un panier 63 est amené devant l'ouverture du corps du réacteur et est glissé à l'intérieur. Le corps du réacteur est basculé à l'horizontal à l'aide du vérin 60 et le bouchon est maintenu solidement serré avec le corps du réacteur.

Le solvant est ensuite injecté à l'intérieur du réacteur à l'aide d'un moyen d'injection. Le solvant pénètre dans le corps du réacteur à travers une rampe d'arrosage et asperge le panier afin d'éviter le risque de pyrolyse des matériaux à traiter.

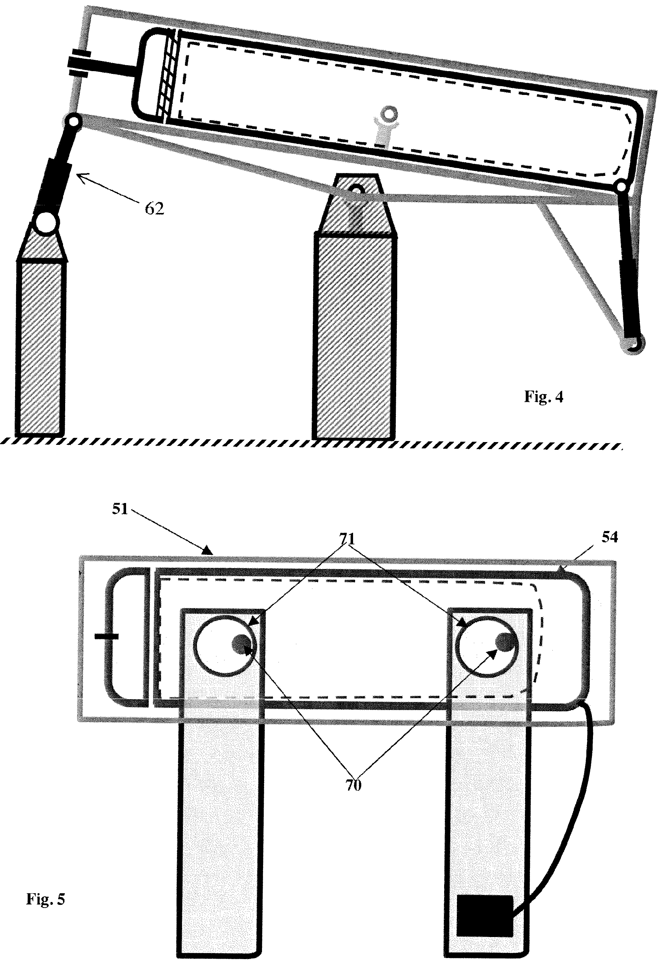

Puis, le réacteur est mis en température en mettant par exemple sous tension une résistance électrique, ou un chauffage au gaz. La plage de température envisagée est typiquement de 200 à 450°C. Les conditions opératoires de température et de pression sont liées et dépendent principalement du matériau à traiter. La plage de pression envisagée dépend, en partie, de la plage de température, elle est de l'ordre de 15 à 300 bars (pour une température variant de 100 à 450 °C), conduisent à provoquer une réaction de solvolyse aqueuse du matériau à l'intérieur du réacteur. Les conditions opératoires de température et de pression sont maintenues dans le réacteur pendant une durée qui est fonction de la température. Elle est typiquement comprise entre 5 et 180 minutes. Pendant le temps de traitement, le vérin 62 est alternativement activé pour pousser et tracter la maille 51 afin de provoquer un mouvement de balancement régulier de celle-ci et donc du réacteur et de son contenu. Le solvant se déplace ainsi constamment dans le corps du réacteur et se charge en résine qui se sépare des fibres par réaction de solvolyse. L'expérimentation a permis de déterminer qu'une oscillation de 10° à une fréquence de 1 hertz pendant 1 heure 30 pour un réacteur de 400 litres procure un traitement homogène des produits placés dans le réacteur. La **FIG.4** présente le corps du réacteur avec un angle de 10° environ par rapport à l'horizontale, l'élongation du vérin 62 est alors maximale.

A l'issue de cette durée, le réacteur est dépressurisé et le solvant chargé de résine est évacué. Les moyens de fermeture 56 sont desserrés par un mouvement de rotation afin de désolidariser les dents et un mouvement de translation. Le bouchon est ainsi libéré et le vérin 60 est activé pour placer le corps du réacteur en position de déchargement, cette position est identique à celle de la **FIG. 3****.** Le panier peut alors être déchargé et le dispositif est prêt pour un nouveau cycle de traitement.

La **FIG.5** présente une variante de réalisation du dispositif de traitement avec une maille 51 supportée par quatre ergots 70 représentant deux axes de rotation. Un premier couple d'ergots est placé à une extrémité de la maille, et l'autre couple à l'autre extrémité. Chaque ergot pénètre dans un trou placé en zone périphérique d'un disque correspondant 71 animé en rotation par un moteur électrique, lesdits disques étant supportés par couple par deux supports. L'utilisation de deux axes permet de mieux répartir le poids du réacteur, surtout pour des réacteurs de grande capacité et de produire plus de diversité dans les mouvements à appliquer au réacteur. Ainsi, en commandant individuellement les mouvements des deux disques, il est possible de faire bouger le réacteur tout en le maintenant horizontal. Il est également possible de l'incliner sur un coté ou sur l'autre en maintenant un disque fixe.

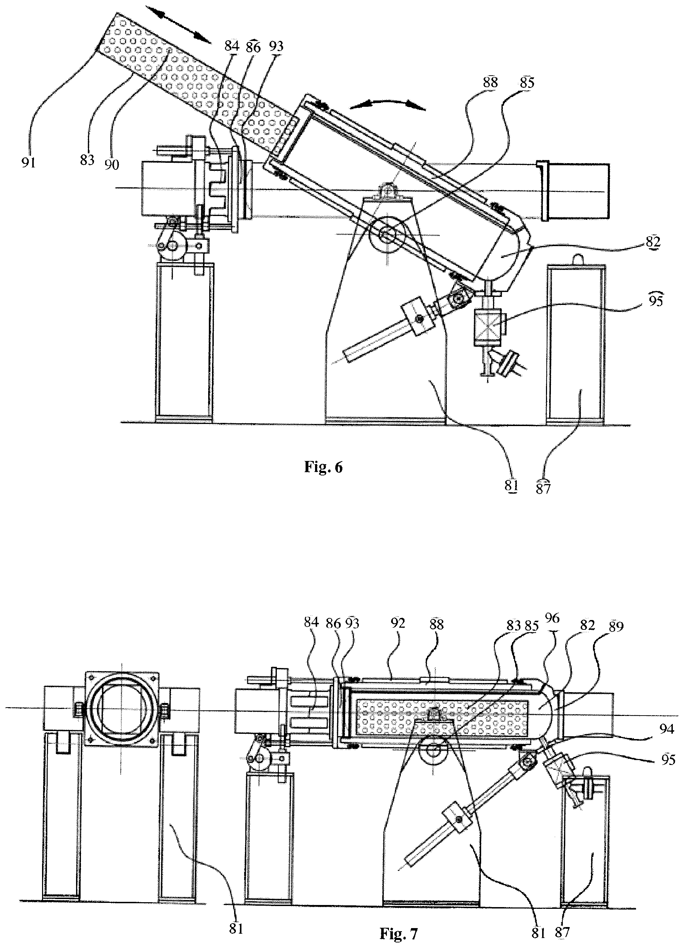

La **FIG.6** présente un exemple particulier de réalisation d'un dispositif de traitement dans une position de chargement. Selon cet exemple, le panier dispose de deux rainures longitudinales en partie inférieure. Ces rainures coopèrent avec des rails placés au fond du corps du réacteur de façon à guider le panier dans son déplacement pour le chargement et le déchargement dans le corps du réacteur. Selon cet exemple, le vérin destiné à basculer le corps du réacteur est solidarisé par un axe de rotation avec le pilier central supportant la quasi totalité du poids du dispositif.

La **FIG.7** présente une vue de face et de profil du dispositif de traitement illustré par la **FIG.6** dans laquelle la maille est en position horizontale. Il est ainsi possible de voir les deux piliers permettant de supporter le réacteur et la maille. Voici la liste des éléments référencés sur les figures **FIG.6** et **FIG.7** **:**
- bâti 81,
- réacteur 82,
- moyen de réception (panier) 83,
- moyen de serrage 84,
- arbre pivot 85,
- bouchon 86,
- mât 87,
- corps du réacteur 88,
- fond de l'enceinte 89,
- panier 90,
- couvercle 91,
- moyens chauffants 92,
- joint 93,
- purge 94,
- vanne 95,
- injection 96.

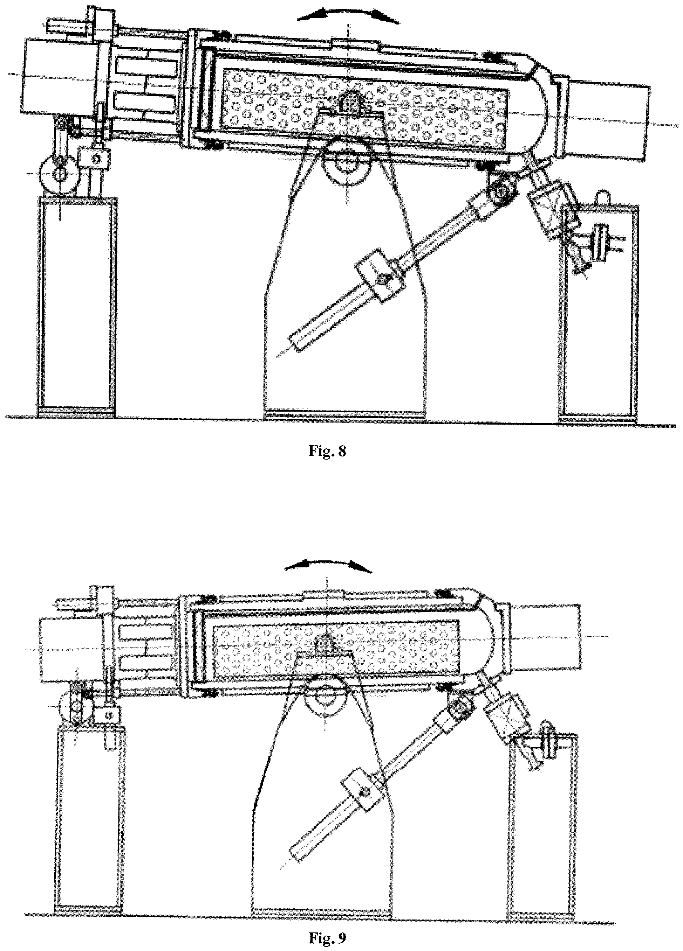

La **FIG.8** présente une vue de profil de l'exemple de dispositif de traitement de la figure 6 dans une première position de traitement. Le moyen de déplacement est ici constitué d'un vilebrequin. Une bielle est couplée à une extrémité avec la maille par une première liaison pivot et couplée à son autre extrémité par une seconde liaison pivot fixée à la périphérie d'un disque en rotation. Ce disque est fixé en partie supérieure d'un pilier et animé en rotation par un moteur électrique. La **FIG.8** présente la maille inclinée vers la gauche, ce qui pousse par gravité le solvant dans cette direction.

La **FIG.9** présente une vue de face et de profil de l'exemple de dispositif de traitement de la figure 6 dans une seconde position de traitement. Selon cette figure, la maille est inclinée vers la droite, ce qui déplace par gravité le solvant dans cette direction. On peut noter que quel que soit l'inclinaison, le panier à l'intérieur du réacteur ne change pas de place, seul le solvant se déplace par les oscillations.

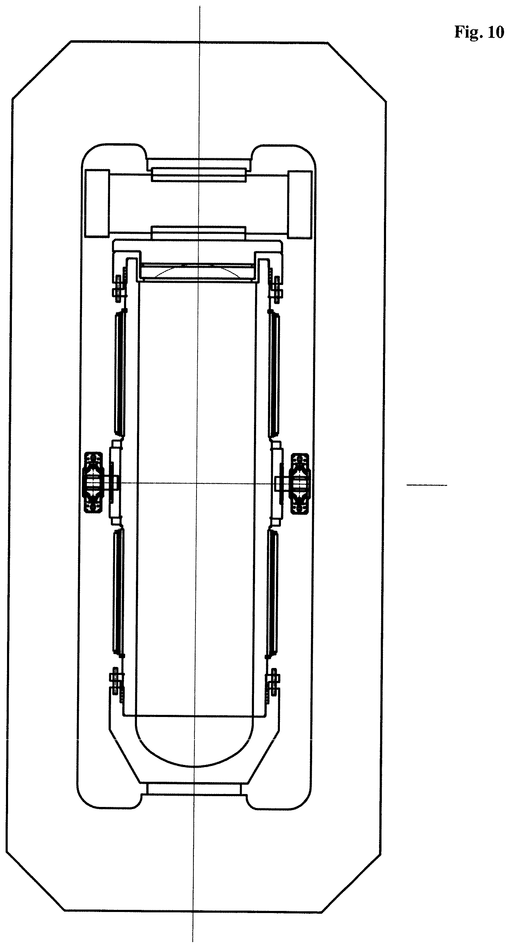

La **FIG.10** présente une vue du dessus d'un exemple de réalisation d'une maille pour le dispositif de traitement illustré par la **FIG.6****.** On peut noter les deux pivots solidaires de la maille venant se poser sur les paliers en partie supérieure des piliers illustrés par la **FIG. 7****.**

Selon un perfectionnement considéré comme une option au présent dispositif objet de l'invention, le réacteur est associé à un capteur d'analyse de l'état de décomposition du matériau à traiter. Selon un premier mode de réalisation, un capteur à ultra-son placé sur le conduit de vidange fournit une indication du niveau de saturation de la résine dans le solvant. De cette manière, il est possible d'arrêter la réaction de solvolyse lorsque le solvant est complètement saturé en résine.

Bien que la présente invention ait été décrite en référence aux modes de réalisation particuliers illustrés, celle-ci n'est nullement limitée par ces modes de réalisation, mais ne l'est que par les revendications annexées. On notera que des changements ou des modifications pourront être apportés par l'Homme du métier.

## Revendications

1. Dispositif de traitement d'un matériau solide composite comprenant des fractions solides revalorisables à extraire, en particulier des fibres, comprenant :
- des moyens de réception (63) du matériau solide composite ;
- un réacteur (2) délimitant une enceinte étanche recevant de façon amovible lesdits moyens de réception (63),
- des moyens d'injection d'au moins un solvant dans le réacteur ;
- des moyens de montée en température du réacteur aptes à engendrer une température et une pression dans ladite enceinte de nature à provoquer une réaction de solvolyse ou de dissolution du matériau pendant une durée de traitement ;
- un moyen d'oscillation (52, 53, 62) du réacteur afin d'exercer un déplacement du solvant au sein de celui-ci pendant la durée du traitement solvothermal du matériau solide composite.
**caractérisé en ce que** le moyen de réception (63) est constitué d'un panier ajouré équipé d'un couvercle (91) sur le dessus.

2. Dispositif de traitement d'un matériau solide composite selon la revendication 1, **caractérisé en ce que** la coque du panier ajouré est une double enveloppe percée de trous.

3. Dispositif de traitement d'un matériau solide composite selon la revendication 1 ou 2, **caractérisé en ce que** ledit réacteur (2) est placé dans une maille (51), le moyen d'oscillation (52, 53, 62) intervenant directement sur la maille pour la faire osciller.

4. Dispositif de traitement d'un matériau solide composite selon la revendication 3, **caractérisé en ce que** le moyen d'oscillation (52, 53, 62) comporte un arbre pivotant (52) solidaire de la maille coopérant avec un palier (53) solidaire d'un support, ledit arbre (52) étant à la verticale du centre de gravité de l'ensemble constitué de la maille, du réacteur et de son contenu.

5. Dispositif de traitement d'un matériau solide composite selon l'une quelconque des revendications précédentes, **caractérisé en ce que** le moyen d'oscillation (52, 53, 62) comporte une bielle couplée à une extrémité par une liaison pivot avec la maille et à l'autre extrémité par une seconde liaison pivot fixée en périphérie d'un disque animé en rotation.

6. Dispositif de traitement d'un matériau solide composite selon l'une quelconque des revendications précédentes, **caractérisé en ce que** ledit réacteur comporte un corps (54) fermé par un bouchon (55), ladite maille (51) disposant d'un moyen de basculement (58, 59, 60) dudit corps (54) pour amener ce corps dans une position apte à recevoir ledit moyen de réception (63).

7. Dispositif de traitement d'un matériau solide composite selon l'une quelconque des revendications précédentes, **caractérisé en ce que** la dite maille (51) dispose d'un bouchon (55) animé en translation et en rotation, et destiné à fermer ledit réacteur lors du traitement.

8. Dispositif de traitement d'un matériau solide composite selon l'une quelconque des revendications précédentes, **caractérisé en ce que** les moyens de réception (63) sont animés en translation par des rails de guidage placés à l'intérieur du corps (54) du réacteur.

9. Dispositif de traitement d'un matériau solide composite selon l'une quelconque des revendications précédentes, **caractérisé en ce que** les moyens d'injection de solvant comporte une rampe d'arrosage intégré dans le corps du réacteur apte à asperger le matériau au début du traitement solvothermal.

10. Dispositif de traitement d'un matériau solide composite selon l'une quelconque des revendications précédentes sous la dépendance de la revendication 3, **caractérisé en ce que** le moyen d'oscillation (52, 53, 62) comporte quatre ergots (70) solidaires de la maille pénétrant dans un trou placé en zone périphérique de quatre disques (71) animés en rotation, lesdits disques étant supportés par couple par deux supports (81).

## Patentansprüche

1. Vorrichtung zur Behandlung eines festen Verbundstoffes, umfassend wiederverwendbare feste Fraktionen, die zu extrahieren sind, insbesondere Fasern, umfassend:
- Mittel zum Aufnehmen (63) des festen Verbundstoffes;
- einen Reaktor (2), der einen dichten Behälter begrenzt, der die Mittel zum Aufnehmen (63) abnehmbar aufnimmt,
- Mittel zum Einspritzen mindestens eines Lösungsmittels in den Reaktor;
- Mittel zur Temperaturerhöhung des Reaktors, die geeignet sind, eine Temperatur und einen Druck in dem Behälter zu erzeugen, die derart sind, um eine Reaktion der Solvolyse oder Auflösung des Materials während einer Behandlungsdauer zu bewirken;
- ein Mittel zur Oszillation (52, 53, 62) des Reaktors, um eine Bewegung des Lösungsmittels innerhalb von diesem während der Dauer der solvothermalen Behandlung des festen Verbundstoffes auszuüben,
**dadurch gekennzeichnet, dass** das Mittel zum Aufnehmen (63) aus einem durchbrochenen Korb, der mit einem Deckel (91) auf der Oberseite ausgestattet ist, gebildet ist.

2. Vorrichtung zur Behandlung eines festen Verbundstoffes nach Anspruch 1, **dadurch gekennzeichnet, dass** die Schale des durchbrochenen Korbs eine doppelte Hülle ist, die mit Löchern durchbohrt ist.

3. Vorrichtung zur Behandlung eines festen Verbundstoffes nach Anspruch 1 oder 2, **dadurch gekennzeichnet, dass** der Reaktor (2) in einer Masche (51) angeordnet ist, wobei das Mittel zur Oszillation (52, 53, 62) direkt auf die Masche einwirkt, um sie oszillierend zu bewegen.

4. Vorrichtung zur Behandlung eines festen Verbundstoffes nach Anspruch 3, **dadurch gekennzeichnet, dass** das Mittel zur Oszillation (52, 53, 62) eine Schwenkwelle (52) aufweist, die mit der Masche fest verbunden ist, die mit einem Lager (53) zusammenwirkt, das mit einem Träger fest verbunden ist, wobei die Welle (52) in der Vertikalen zu dem Schwerpunkt der Anordnung ist, die aus der Masche, dem Reaktor und seinem Inhalt gebildet ist.

5. Vorrichtung zur Behandlung eines festen Verbundstoffes nach einem der vorhergehenden Ansprüche, **dadurch gekennzeichnet, dass** das Mittel zur Oszillation (52, 53, 62) eine Pleuelstange aufweist, die an einem Ende durch eine Schwenkverbindung mit der Masche verbunden ist und an dem anderen Ende durch eine zweite Schwenkverbindung am Rand einer Scheibe, die in Drehung versetzt ist, befestigt ist.

6. Vorrichtung zur Behandlung eines festen Verbundstoffes nach einem der vorhergehenden Ansprüche, **dadurch gekennzeichnet, dass** der Reaktor einen Körper (54) aufweist, der durch einen Stopfen (55) verschlossen ist, wobei die Masche (51) über ein Kippmittel (58, 59, 60) des Körpers (54) verfügt, um diesen Körper in eine Position zu bringen, die geeignet ist, das Mittel zum Aufnehmen (63) aufzunehmen.

7. Vorrichtung zur Behandlung eines festen Verbundstoffes nach einem der vorhergehenden Ansprüche, **dadurch gekennzeichnet, dass** die Masche (51) über einen Stopfen (55) verfügt, der in Translation und in Drehung versetzt wird und dazu bestimmt ist, den Reaktor bei der Behandlung zu verschließen.

8. Vorrichtung zur Behandlung eines festen Verbundstoffes nach einem der vorhergehenden Ansprüche, **dadurch gekennzeichnet, dass** die Mittel zum Aufnehmen (63) durch Führungsschienen, die im Inneren des Körpers (54) des Reaktors angeordnet sind, in Translation versetzt werden.

9. Vorrichtung zur Behandlung eines festen Verbundstoffes nach einem der vorhergehenden Ansprüche, **dadurch gekennzeichnet, dass** die Mittel zum Einspritzen eines Lösungsmittels eine Sprührampe aufweisen, die in dem Körper des Reaktors integriert ist, die geeignet ist, das Material zu Beginn der solvothermalen Behandlung zu besprühen.

10. Vorrichtung zur Behandlung eines festen Verbundstoffes nach einem der vorhergehenden Ansprüche in Abhängigkeit von dem Anspruch 3, **dadurch gekennzeichnet, dass** das Mittel zur Oszillation (52, 53, 62) vier Stifte (70) aufweist, die mit der Masche fest verbunden sind, die in ein Loch eindringen, das im Umfangsbereich von vier Scheiben (71) angeordnet ist, die in Drehung versetzt werden, wobei die Scheiben paarweise durch zwei Träger (81) getragen sind.

## Claims

1. Device for treating a composite solid material comprising recoverable solid fractions to be extracted, in particular fibres, comprising:
- means for receiving (63) the composite solid material;
- a reactor (2) delineating a sealed enclosure detachably receiving said receiving means (63);
- means for injecting at least one solvent into the reactor;
- means for raising the temperature of the reactor designed to create a temperature and a pressure in said chamber in such a way as to cause a reaction of solvolysis or dissolution of the material during a period of treatment;
- a means for oscillating (52, 53, 62) the reactor so as to cause a movement of the solvent inside the latter during the period of solvothermal treatment of the composite solid material,
**characterised in that** the receiving means (63) consists of a perforated basket fitted with a cover (91) on the top.

2. Device for treating a composite solid material according to Claim 1, **characterised in that** the shell of the perforated basket is a double envelope pierced with holes.

3. Device for treating a composite solid material according to Claim 1 or 2, **characterised in that** said reactor (2) is placed in a mesh (51), the oscillation means (52, 53, 62) acting directly on the mesh so as to cause it to oscillate.

4. Device for treating a composite solid material according to Claim 3, **characterised in that** the oscillation means (52, 53, 62) comprises a pivoting shaft (52) secured to the mesh cooperating with a bearing (53) integral with a support, said shaft (52) being disposed vertically on the centre of gravity of the assembly composed of the mesh, the reactor and its contents.

5. Device for treating a composite solid material according to any one of the preceding claims, **characterised in that** the oscillation means (52, 53, 62) comprises a connecting rod coupled at one end by a pivot connection with the mesh and at the other end by a second pivot connection fixed at the periphery of a rotatably actuated disc.

6. Device for treating a composite solid material according to any one of the preceding claims, **characterised in that** said reactor comprises a body (54) closed by a plug (55), said mesh (51) having a means for tilting (58, 59, 60) said body (54) so as to bring the body into a position capable of receiving said receiving means (63).

7. Device for treating a composite solid material according to any one of the preceding claims, **characterised in that** said mesh (51) has a plug (55) translatably and rotatably actuated, and designed to close said reactor during the treatment.

8. Device for treating a composite solid material according to any one of the preceding claims, **characterised in that** the receiving means (63) are translatably actuated by guide rails placed inside the body (54) of the reactor.

9. Device for treating a composite solid material according to any one of the preceding claims, **characterised in that** the means for injecting solvent comprises a spray boom integrated into the body of the reactor designed to spray the material at the beginning of the solvothermal treatment.

10. Device for treating a composite solid material according to any one of the preceding claims under the dependency of Claim 3, **characterised in that** the oscillation means (52, 53, 62) comprises four lugs (70) secured to the mesh penetrating into a hole placed in the peripheral zone of four rotatably actuated discs (71), said discs being supported in pairs by two supports (81).
